# EUROPEAN PATENT APPLICATION

(11) **EP 1 719 733 A2**
(43) Date of publication of application: **08.11.2006**
(21) Application number: 06113374.0
(22) Date of filing: 02.05.2006
(51) Int. Cl.: B66F 11/04

(54) **Aerial work platform**

(30) Priority: 03.05.2005 IT BO20050313
(71) Applicant: Hinowa S.p.A., 37054 Nogara (IT)
(72) Inventor: Fracca, Dante, 37054 Nogara (IT)
(74) Representative: Jorio, Paolo

(57) **Abstract**

An overhead platform is provided with a people-carrying nacelle (8), which presents a substantially horizontal resting plane (P), and is slidingly coupled to a lifting device (9) so as to move, with respect to the lifting device (9) itself, in a direction (20) substantially orthogonal to the resting plane (P); the nacelle (8) and the lifting device (9) being reciprocally coupled by means of a ball recirculation coupling (26).

## Description

The present invention relates to an overhead platform.

In particular, the present invention relates to an overhead platform of the type comprising a people-carrying nacelle presenting a substantially horizontal resting plane and a supporting and transporting unit of the nacelle itself.

Generally, the nacelle supporting and transporting unit comprises a self-propelled vehicle, a rotating turret coupled to the self-propelled vehicle to turn, with respect to the self-propelled vehicle itself, about a substantially vertical longitudinal axis, a lifting device, which is interposed between the turret and the nacelle, is shaped so as to maintain the resting plane of the nacelle always in horizontal position, and is adapted to shift the nacelle itself between a lowered rest position and a plurality of raised operative positions, and a stabiliser device for stabilising, in use, the overhead platform itself.

The nacelle is slidingly coupled to the lifting device so as to move, with respect to the lifting device itself, in a direction substantially orthogonal to the resting plane and to allow a measuring device, normally consisting of at least one extensimeter load cell, to measure the entity of a load arranged on the resting plane itself.

Generally, the coupling between the nacelle and the lifting device is obtained by means of at least one guide fixed to the lifting device and at least one slide carried by the nacelle and slidingly engaged in the guide, and allows the nacelle to shift in the mentioned direction from a raised position to a lowered position under the bias of the load arranged on the resting plane, and from the lowered position to the raised position under the bias of an elastic return device.

Overhead platforms of the type described above present some drawbacks mainly deriving from the fact that the friction between the guide and the slide is relatively high, depends on the position of the load on the resting plane, and may in any case compromise the correct measuring of the load itself by the mentioned measuring device.

It is the object of the present invention to provide an overhead platform which is free from the above-described drawbacks.

According to the present invention there is provided an overhead platform as claimed in the attached claims.

The present invention will now be described with reference to the accompanying drawings illustrating a non-limitative embodiment example thereof, in which:
figure 1 is a schematic side view of a preferred embodiment of the overhead platform of the present invention;
figure 2 is a first schematic side view of a detail of the overhead platform in figure 1; and
figure 3 is a second side schematic view, with parts magnified for clarity, of the detail in figure 2.

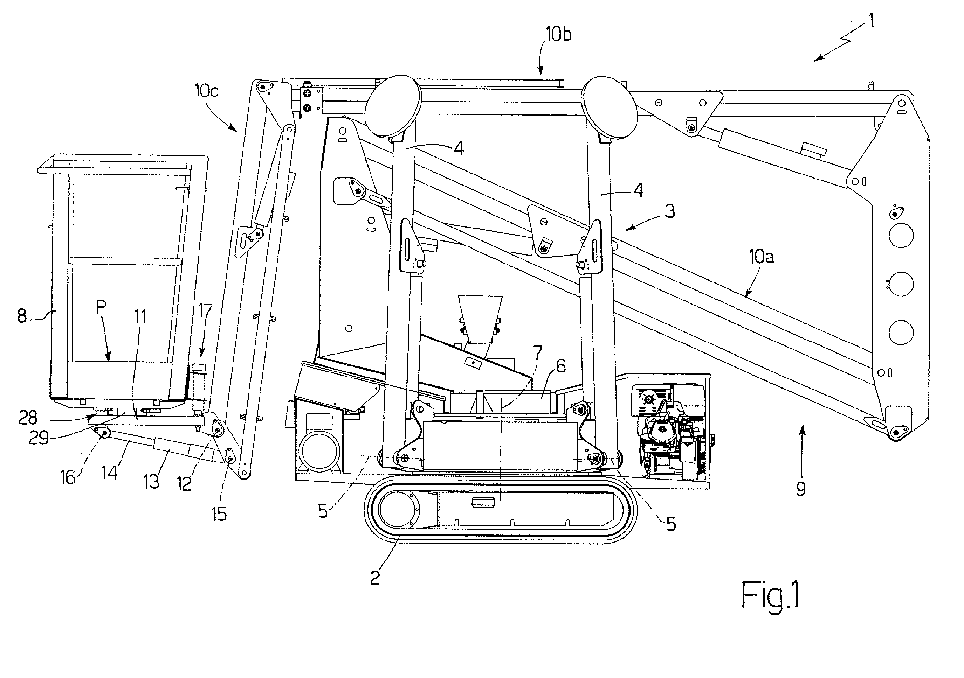

With reference to figure 1, it is indicated as a whole by 1 an overhead platform comprising a crawler vehicle 2 provided with a stabiliser device 3 of the known type, which is adapted to stabilise, in use, the platform 1 itself, and comprises a plurality of pivoting arms 4 (four arms 4 in the case in point), each of which is rotationally coupled to the vehicle 2 to pivot, with respect to the vehicle 2 itself, about a respective fulcrum axis 5 essentially horizontal between a rest position (figure 1) and an operative position (not shown).

The vehicle 2 further supports a rotating turret 6, which extends upwards from the vehicle 2, and is rotationally coupled to the vehicle 2 to rotate with respect to the vehicle 2 itself and under the bias of an actuating device of the known type and not shown, about its longitudinal, sustantially vertical axis 7.

To the turret 6 is connected a people-carrying nacelle 8 of the known type, which presents an essentially horizontal resting plane P, and is mobile, with respect to the vehicle 2 and under the bias of a lifting device 9 of the known type shaped so as to maintain the plane P always in horizontal position, between a lowered rest position (figure 1) and a plurality of raised operative positions (not shown).

The device 9 comprises a plurality of lifting arms 10 (three lifting arms 10a, 10b, 10c in the case in point) arranged in sequence and reciprocally connected in the known way, and a supporting frame 11, which is adapted to support the nacelle 8, is hinged to the arm 10c so as to pivot, with respect to the arm 10c, about an axis 12 with substantially horizontal fulcrum, and is always maintained in horizontal position by means of an actuating levelling cylinder 13, which presents an output rod 14, and extends between two axes 15, 16 parallel to axis 12, and of which axis 15 is the axis of rotation of cylinder 13 with respect to the arm 10c, and axis 16 is the axis of rotation of the rod 14 with respect to the frame 11.

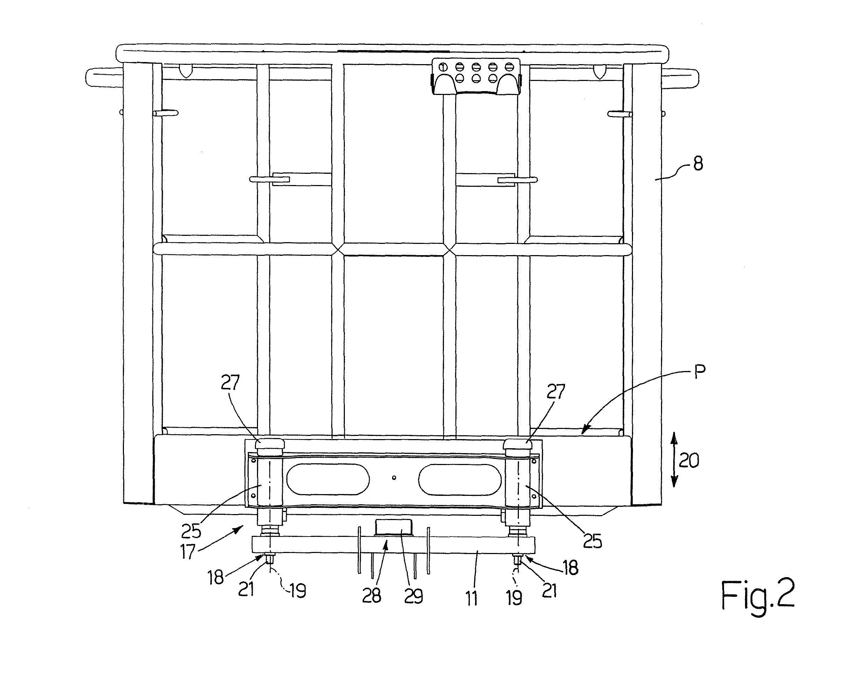

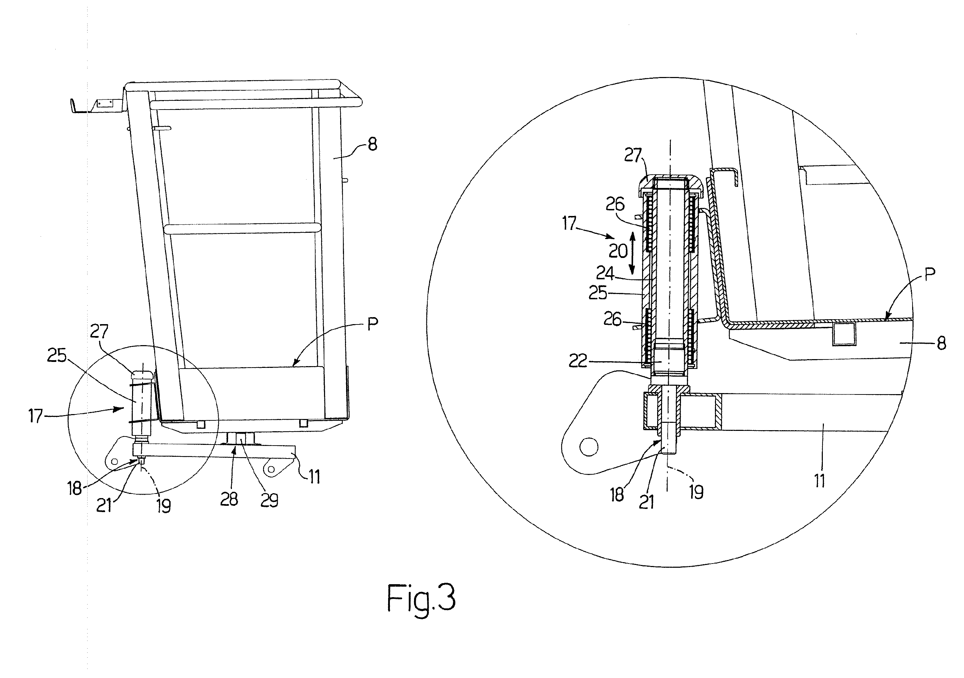

According to what shown in figures 2 and 3, the nacelle 8 is connected to the frame 11 by means of a coupling device 17 comprising two reciprocally parallel pins 18, each of which extends through the frame 11, presents a longitudinal axis 19 parallel to a substantially vertical direction 20, comprises a lower threaded portion 21 protruding downwards from the frame 11 and an upper threaded portion 22 protruding upwards from the frame 11, and is fixed to the frame 11 by means of a lock nut (not shown) screwed to the portion 21 itself.

On the upper portion 22 of each pin 18, there is fastened the lower end of a respective guide stem 24, which extends upwards coaxially to the respective axis 19, and is slidingly engaged by a tubular slide 25, which is fastened to the nacelle 8, extends about the stem 24 coaxially to the respective axis 19, and is coupled to the stem 24 itself by interposition of a pair of linear ball recirculation bearings 26 of the known type arranged in sequence along the respective axis 19.

The device 17 further comprises two closing plugs 27 fastened onto the upper ends of the stems 24 to prevent the slides 25 and, consequently, the nacelle 8 from releasing the stems 24 themselves.

Finally, the overhead platform 1 is provided with a measuring device 28 comprising, in the case in point, an extensimeter load cell 29 of the known type fastened to the frame 11 underneath the nacelle 8 and adapted to measure the entity of the load arranged on the resting plane P of the nacelle 8 itself.

In use, the nacelle 8 is mobile under the bias of the load arranged on the plane P, from a raised position to a lowered position, in which the cell 29 measures the load itself, and is furthermore mobile under the bias of the cell 29, from the lowered position to the raised position.

Due to the presence of the linear ball recirculation bearings 26, the friction between the guiding stems 24 and the slides 25 is relatively low, independent from the position of the load on the resting plane P of the nacelle 8, and therefore allows a correct measuring of the load itself by the measuring device 28.

## Claims

1. An overhead platform comprising a people-carrying nacelle (8) presenting a determined resting plane (P); lifting means (9) of the nacelle (8); and coupling means (17) to reciprocally couple the nacelle (8) and the lifting means (9), the nacelle (8) being slidingly coupled to the lifting means (9) so as to move, with respect to the lifting means (9) themselves, in a determined direction (20); and **characterised in that** said coupling means (17) comprise ball recirculation means (26).

2. An overhead platform according to claim 1, in which said direction (20) is substantially orthogonal to said resting plane (P).

3. An overhead platform according to claim 1 or 2, in which said coupling means (17) comprise at least a first coupling member (24) carried by said lifting means (9) and, for each first coupling member (24), a second coupling member (25) carried by the nacelle (8) and slidingly coupled to the first coupling member (24) itself; at least one ball bearing being interposed between said first and second coupling members (24, 25).

4. An overhead platform according to claim 3, in which said coupling means (17) comprise at least one linear recirculation ball bearing (26) interposed between said first and second coupling members (24, 25).

5. An overhead platform according to any of the preceding claims, and further comprising measuring means (28) interposed between the nacelle (8) and the lifting means (9) to detect the entity of a load arranged on said resting plane (P).

6. An overhead platform according to claim 5, in which said measuring means (28) comprise at least one load cell (29) interposed between the nacelle (8) and the lifting means (9); the nacelle (8) being mobile from a raised position to a lowered position under the bias of the load arranged on the resting plane (P) and from the lowered position to the raised position under the bias of said load cell (29).
